# EUROPÄISCHE PATENTSCHRIFT

(11) **EP 0 321 822 B1**
(45) Veröffentlichungstag und Bekanntmachung des Hinweises auf die Patenterteilung: **13.10.1993**
(21) Anmeldenummer: 88120738.5
(22) Anmeldetag: 12.12.1988
(51) Int. Cl.: F16M 11/24, A61G 12/00, F16M 11/20

(54) **Deckenstativ zur Aufnahme von medizinischen Geräten**
Ceiling mount for supporting medical equipment
Support fixé au plafond pour la suspension d'appareils médicaux

(30) Priorität: 23.12.1987 DE 8716928 U
(43) Veröffentlichungstag der Anmeldung: 28.06.1989
(73) Patentinhaber: Kreuzer GmbH + Co. OHG, D-82178 Puchheim (DE)
(72) Erfinder: Kreuzer, Friedhelm, D-8039 Puchheim (DE)
(74) Vertreter: Prüfer, Lutz H., Dipl.-Phys.

(56) Entgegenhaltungen:
- EP-A- 0 257 299
- DE-A- 3 312 137
- US-A- 4 645 156

## Beschreibung

Die Erfindung betrifft ein Deckenstativ zur Aufnahme von medizinischen Geräten mit einem Ausleger und einer Säule und durch diese geführten Versorgungsleitungen und mit einer ersten Geräteaufnahmeeinrichtung, wie es z.B. aus der US-A-4 645 156 bekannt ist.

Derartige Stative werden insbesondere in Operationsräumen von Krankenhäusern eingesetzt. Eine zentrale Säule trägt Geräte wie einen Monitor oder Tastaturen, die auf eine ganz bestimmte Arbeitshöhe und bei Monitoren auf einen bestimmten Neigungswinkel für die Bedienungsperson eingestellt werden. Gegebenenfalls können weitere Schwenkarme vorgesehen sein, die mit der zentralen Säule fest verbunden sind. Gegebenenfalls können auch diese Monitore tragen, die der Arbeitsposition entsprechend in ihrer Drehstellung und in ihrer Neigung relativ zur Horizontalen eingestellt werden. Es ist erwünscht, daß an der Säule auch ein Narkosegerät getragen werden kann, welches allerdings auch von der Säule abnehmbar und zu anderen Einsatzorten bewegbar sein soll. Da solche Narkosegeräte zum Tragen zu schwer sind, weist ein bekanntes Deckenstativ am unteren Ende der Ausleger-Säule eine Art Gabel auf. Im Boden des aufzunehmenden Narkosegerätes sind der Gabel entsprechende Ausnehmungen vorhanden. Das Narkosegerät wird auf die Gabel aufgesetzt und so von dem Stativ gehalten. Das Aufsetzen bzw. Abnehmen des Narkosegerätes erfolgt mittels eines Hubwagens, der so höhenverstellbar ist, daß er das Narkosegerät aufnimmt und es von der Gabel abhebt, so daß das Narkosegerät dann mit dem Hubwagen von der Gabel abgezogen werden kann. Ein Nachteil besteht darin, daß nur speziell angepaßte Narkosegeräte, insbesondere ohne festes Fahrgestell aufgenommen werden können. Da die überwiegende Anzahl der im praktischen Einsatz befindlichen Narkosegeräte ein fest mit dem Gerät verbundenes Fahrgestell aufweisen, ist das bekannte Deckenstativ für deren Aufnahme nicht geeignet.

Aufgabe der Erfindung ist es, ein Deckenstativ der eingangs beschriebenen Art zu schaffen, mit dem verschiedenste medizinische Geräte und insbesondere Narkosegeräte und Patientenüberwachungsgeräte und insbesondere auch solche mit Fahrgestell aufnehmbar sind.

Aufgabe ist es ferner, das Deckenstativ so auszubilden, daß es möglich ist, einerseits Geräte wie Monitoren und ähnliches in einer voreingestellten Höhe festzuhalten und andererseits den Abtransport eines zu einem anderen Einsatzort zu bringenden Gerätes, wie eines auf einem Transportwagen aufgebauten Narkosegerätes, zu ermöglichen. Dabei soll das unter bestimmten Umständen abzutransportierende Gerät während seiner Aufnahme am Deckenstativ so angehoben sein, daß am Boden Beinfreiheit besteht.

Zur Lösung der Aufgabe ist das Deckenstativ wie im Anspruch 1 angegeben ausgebildet.

Weitere Merkmale und Zweckmäßigkeiten der Erfindung ergeben sich aus der Beschreibung eines Ausführungsbeispieles anhand der Figuren. Von den Figuren zeigen:
- Fig. 1: eine Vorderansicht des Deckenstatives mit aufgenommenem Narkosegerät;
- Fig. 2: eine Seitenansicht des Deckenstatives mit aufgenommenem Narkosegerät, wobei die abgesenkte Stellung gestrichelt und die angehobene Stellung in durchgezogenen Linien gezeichnet ist und;
- Fig. 3: einen Teil des in Fig. 2 in Seitenansicht gezeigten Deckenstativs mit hochgeklappten Schienen.

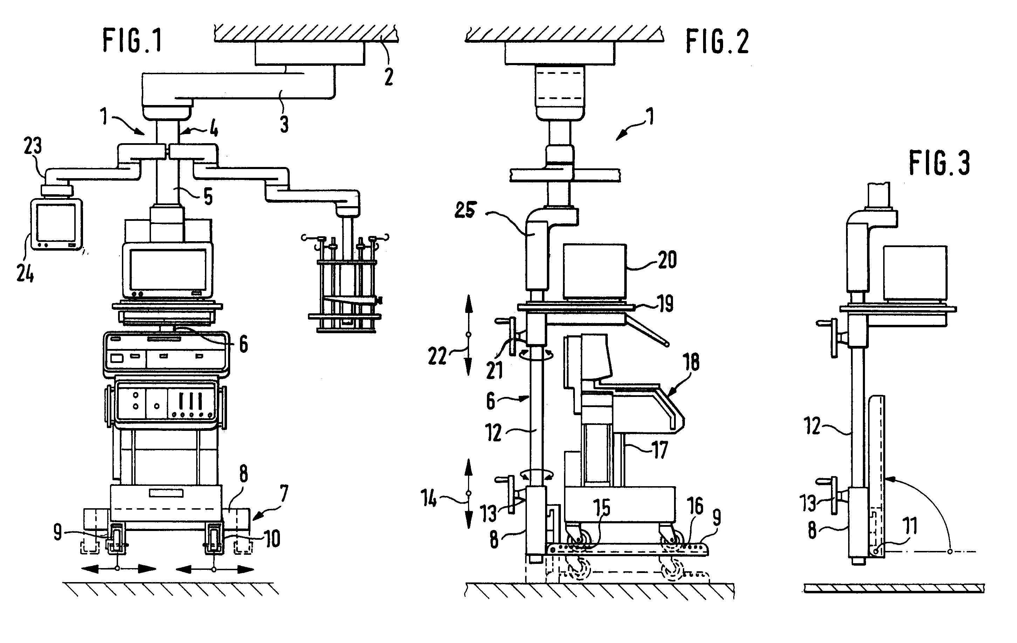

Das Deckenstativ 1 weist einen an einer Decke 2 über ein Gelenk zu befestigenden Ausleger 3 und eine mit diesem gelenkig verbundene Säule 4 auf. Die Säule 4 weist einen mit dem Ausleger 3 verbundenen ersten Abschnitt 5 und einen zweiten Abschnitt 6 auf. Am bodenseitigen Ende des zweiten Abschnittes 6 ist eine Geräteaufnahmeeinrichtung 7 vorgesehen, diese weist am bodenseitigen Ende ein sich quer zu dem sich in vertikaler Richtung erstreckenden zweiten Abschnitt erstreckendes Joch 8 auf. Wie insbesondere aus den Figuren 2 und 3 ersichtlich ist, ist an dem Joch 8 ein sich in Arbeitsstellung in horizontaler Richtung erstreckendes Schienenpaar 9, 10 angeordnet. Die Verbindung zwischen Joch 8 und den Schienen 9, 10 erfolgt über ein jeweiliges Drehgelenk 11 derart, daß die Schienen in Ruhestellung in der in Fig. 3 ersichtlichen Weise nach oben einklappbar sind.

In dem gezeigten Ausführungsbeispiel weist der zweite Abschnitt 6 eine Zahnstange 12 und eine das Joch 8 tragende Spindel 13 auf. Dadurch ist die Geräteaufnahmeeinrichtung 7 durch Betätigen der Spindel 13 in Richtung des Pfeiles 14 zwischen der in Fig. 2 in durchgezogenen Linien gezeigten Arbeitsstellung und der in gestrichelten Linien gezeigten abgesenkten Stellung auf- und abbewegbar. Dabei erfolgt die Höhenverstellung bevorzugt über eine Handkurbel, was den Vorteil hat, daß keine Kontaktleisten oder ähnliche Sicherheitseinrichtungen erforderlich sind. Anstelle des handbetätigten Höhenverstellmechanismus kann die Höhenverstellung alternativ auch über einen motorischen Antrieb erfolgen.

Die Schienen 9, 10 sind über eine in Fig. 1 nur schematisch dargestellte Führung an dem Joch 8 in horizontaler Richtung entgegengesetzt zueinander ausfahrbar bzw. zueinander einfahrbar derart, daß der Abstand zwischen den beiden Schienen von einer in Fig. 1 in durchgezogenen Linien gezeigten engeren Stellung bis zu einer gestrichelt angedeuteten weiter auseinanderliegenden Stellung hin- und herfahrbar sind, wie dies durch die Pfeile in Fig. 1 angedeutet ist. Dadurch wird erreicht, daß eine breitenmäßige Anpassung der Schiene an verschiedenste Radabstände von Transportwagen aufweisenden Einrichtungen möglich ist.

Die Schienen weisen sowohl auf der dem Joch 8 zugewandten Seite als auch auf der Seite des freien Endes eine Mehrzahl von in Richtung der Schiene einen Abstand voneinander aufweisenden Bohrungen 15, 16 auf, die dazu dienen, sich quer über die jeweilige Schiene erstreckende Stifte aufzunehmen, die die Bewegung eines auf den Schienen aufgestellten Wagens 17 mit von diesem getragenen Gerät 18 zu blockieren.

In einer Höhe, die sich oberhalb eines sich in Arbeitsstellung befindenden Narkosegerätes 18 erstreckt, ist ein erster Monitorträger 10 vorgesehen, der zur Aufnahme eines ersten Monitors 20 dient. Der Monitorträger ist über eine entsprechende Spindel 21 auf der Zahnstange 12 in Richtung des Pfeiles 22 unabhängig von der Höhe der Geräteaufnahmeeinrichtung 7 höhenverstellbar. Sowohl die Geräteaufnahmeeinrichtung 7 als auch der erste Monitorträger sind ferner in der durch die in Fig. 2 gezeigten Pfeile angedeuteten Weise um die Säulenachse schwenkbar. Das Stativ trägt einen zweiten Monitorträger 23, der mit dem ersten Abschnitt 5 der Säule bezüglich der axialen Richtung der Säule fest verbunden ist. Der erste Monitorträger 19 kann alternativ auch mit dem ersten Abschnitt 5 der Säule verbunden sein.

Im Betrieb sind die beiden Monitore 20 und 24 bezüglich ihrer Neigung des Bildschirmes zu dem Arbeitsplatz passend in ihrer Neigung eingestellt. Das Narkosegerät 18 mit seinem Wagen 17 ist auf den Schienen 9, 10 mit Hilfe der Verriegelungsstifte ortsfest gehalten und über die Spindel 13 soweit nach oben gefahren, daß Bodenfreiheit besteht, so daß auch das Narkosegerät um die Achse des zweiten Abschnittes schwenkbar ist. Das Narkosegerät wird mit den durch den ortsfesten ersten Abschnitt der Säule geführten und hier nicht gezeigten Versorgungsleitungen verbunden.

Soll das Narkosegerät zu einem anderen Einsatzort bewegt werden, wird die Geräteaufnahmeeinrichtung die in Fig. 2 gestrichelt dargestellte Stellung zum Boden abgesenkt. Dann wird das Gerät mit dem Wagen weggefahren. Gewünschtenfalls kann dasselbe oder ein anderes Gerät jederzeit wieder auf die Schienen gefahren werden. Hat der Wagen eines anderen Gerätes einen anderen Radabstand, werden die Schienen zur Anpassung an denselben seitlich verschoben. Nach der Aufnahme des Wagens wird dieser wiederum in die durchgezogen gezeigte Stellung angehoben. Wird kein Wagen aufgenommen, werden die Schienen in die in Fig. 3 gezeigte Stellung nach oben geklappt. Weder zur Abgabe eines Gerätes noch zur Aufnahme eines neuen Gerätes ist es erforderlich, die übrigen Geräte in ihrer Höhenstellung zu verändern. Das ist wesentlich, weil dadurch vermieden wird, daß die einmal für den Arbeitsplatz günstig eingestellten Monitore jeweils wieder neu in ihrer Neigung einzujustieren sind.

## Patentansprüche

1. Deckenstativ (1) zur Aufnahme von medizinischen Geräten, mit einem mit der Decke (2) verbundenen Ausleger (3), einer mit dem anderen Ende des Auslegers (3) verbundenen Säule (4), durch die Versorgungsleitungen geführt sind, und mit einer Geräteaufnahmeeinrichtung (7),
dadurch gekennzeichnet, daß die Geräteaufnahmeeinrichtung (7) höhenverstellbar an der Säule (4) vorgesehen ist, so daß die Geräteaufnahmeeinrichtung (7) ein von einem Fahrgestell getragenes medizinisches Gerät (18) durch Untergreifen des Fahrgestelles aufnimmt.

2. Deckenstativ nach Anspruch 1,
dadurch gekennzeichnet, daß die Säule (4) einen mit dem Ausleger (3) verbundenen ersten Abschnitt (5) und einen die Geräteaufnahmeeinrichtung (7) am bodenseitigen Ende aufweisenden zweiten Abschnitt (6) aufweist, wobei beide Abschnitte (5, 6) durch einen weiteren Ausleger (25) verbunden sind.

3. Deckenstativ nach Anspruch 2,
dadurch gekennzeichnet, daß an der Säule ein Monitorträger (19) vorgesehen ist.

4. Deckenstativ nach Anspruch 3,
dadurch gekennzeichnet, daß der Abstand zwischen Geräteaufnahmeeinrichtung (7) und Monitorträger (19) einstellbar ist.

5. Deckenstativ nach einem der Ansprüche 1 bis 4,
dadurch gekennzeichnet, daß die Geräteaufnahmeeinrichtung (7) zwei in ihrem Abstand zueinander einstellbare Schienen (9, 10) aufweist.

6. Deckenstativ nach Anspruch 5,
dadurch gekennzeichnet, daß die Schienen (9, 10) zur Aufnahme von Laufrollen des Fahrgestelles ausgebildet sind.

7. Deckenstativ nach Anspruch 5 oder 6,
dadurch gekennzeichnet, daß an den Schienen (9, 10) eine einstellbare Tiefenbegrenzung vorgesehen ist.

8. Deckenstativ nach einem der Ansprüche 5 bis 7,
dadurch gekennzeichnet, daß eine das Fahrgestell in einer vorgegebenen Stellung haltende Verriegelungseinrichtung vorgesehen ist.

9. Deckenstativ nach einem der Ansprüche 5 bis 8,
dadurch gekennzeichnet, daß die Schienen (9, 10) um einen am säulenseitigen Ende liegenden Drehpunkt (11) hochklappbar sind.

10. Deckenstativ nach einem der Ansprüche 5 bis 8,
dadurch gekennzeichnet, daß die Schienen (9, 10) an einem sich quer zu dem zweiten Abschnitt aufweisenden Joch (8) befestigt sind.

## Claims

1. A ceiling mount (1) for supporting medical equipments, comprising an extension arm (3) connected to the ceiling (2), a column (4) connected to the other end of the extension arm (3), supply conduits being leaded through the column, and an equipment supporting device (7),
characterized in that the equipment supporting device (7) is provided at the column (4) adjustable in height such that the equipment supporting device (7) supports a medical equipment (18) carried by a chassis in holding the chassis from underneath.

2. The ceiling mount according to claim 1,
characterized in that the column (4) comprises a first portion (5) connected with the extension arm (3) and a second portion (6) having the equipment supporting device (7) at the bottom side end, the two portions (5, 6) being connected by a further extension arm (25).

3. The ceiling mount according to claim 2,
characterized in that a monitor support (19) is provided at the column.

4. The ceiling mount according to claim 3,
characterized in that the distance between the equipment supporting device (7) and the monitor support (19) is adjustable.

5. The ceiling mount according to one of claims 1 - 4,
characterized in that the equipment supporting device (7) comprises two rails (9, 10) the distance thereof being adjustable.

6. The ceiling mount according to claim 5,
characterized in that the rails (9, 10) are adapted for receiving of rolls of the chassis.

7. The ceiling mount according to claim 5 or 6,
characterized in that an adjustable depth limitation is provided at the rails (9, 10).

8. The ceiling mount according to one of claims 5 - 7,
characterized in that a ledge device is provided for holding the chassis in a predetermined position.

9. The ceiling mount according to one of claims 5 - 8,
characterized in that the rails (9, 10) are upward tiltable about a pivot point (11) arranged at the column side end.

10. The ceiling mount according to one of claims 5 - 8,
characterized in that the rails (9, 10) are fixed to a yoke (8) being provided transverse to the second portion.

## Revendications

1. Statif plafonnier (1) pour recevoir des appareils médicaux, avec un bras en porte à faux (3) relié au plafond (2), une colonne (4) fixée à l'autre extrémité du bras (3), et dans laquelle sont menés des conduits d'alimentation, et avec un dispositif récepteur d'appareil (7), caractérisé en ce que le dispositif récepteur d'appareil (7) est prévu réglable en hauteur contre la colonne (4), de telle manière que le dispositif récepteur d'appareil (7) puisse recevoir un appareil médical (18) porté par un chariot, en prenant le chariot par en dessous.

2. Statif plafonnier selon la revendication 1, caractérisé en ce que la colonne (4) présente une première partie (5) reliée au bras (3) et une seconde partie (6) présentant, à son extrémité côté sol, le dispositif récepteur d'appareil (7), les deux parties (5, 6) étant reliées par un autre bras en porte à faux (25).

3. Statif plafonnier selon la revendication 2, caractérisé en ce qu'il est prévu contre la colonne un support de moniteur (19).

4. Statif plafonnier selon la revendication 3, caractérisé en ce que l'écartement entre le dispositif récepteur d'appareil (7) et le support de moniteur (19) est réglable.

5. Statif plafonnier selon l'une quelconque des revendications 1 à 4, caractérisé en ce que le dispositif récepteur d'appareil (7) présente deux rails (9, 10) à écartement réglable entre eux.

6. Statif plafonnier selon la revendication 5, caractérisé en ce que les rails (9, 10) sont configurés pour recevoir les roulettes du chariot.

7. Statif plafonnier selon la revendication 5 ou 6, caractérisé en ce qu'il est prévu sur les rails (9, 10) une limitation réglable de profondeur.

8. Statif plafonnier selon l'une quelconque des revendications 5 à 7, caractérisé en ce qu'il est prévu un dispositif de blocage maintenant le chariot dans une position prédéterminée.

9. Statif plafonnier selon l'une quelconque des revendications 5 à 8, caractérisé en ce que les rails (9, 10) peuvent être basculés vers le haut autour d'un point de rotation (11) situé à l'extrémité côté colonne.

10. Statif plafonnier selon l'une quelconque des revendications 5 à 8, caractérisé en ce que les rails (9, 10) sont fixés à un support (8) s'étendant transversalement à la seconde partie.
